# EUROPEAN PATENT APPLICATION

(11) **EP 2 484 546 A2**
(43) Date of publication of application: **08.08.2012**
(21) Application number: 11466039.2
(22) Date of filing: 13.12.2011
(51) Int. Cl.: B60K 15/063, B60R 25/00, G01F 23/00, G07F 13/02, F02M 37/00, G07B 15/00, G08G 1/127, B60K 15/03, G07C 5/08

(54) **Connection providing control of drawing fuel from combustion engine tank into fuel system, particularly in a vehicle, depending on the authorisation of the user of the combustion equipment**

(30) Priority: 13.12.2010 CZ 20102361
(71) Applicant: Novák, Miroslav, 277 13 Kostelec nad Labem (CZ)
(72) Inventor: Novák, Miroslav, 277 13 Kostelec nad Labem (CZ)
(74) Representative: Halaxova, Zdenka

(57) **Abstract**

Connection providing control of drawing fuel from the tank into the fuel system, particularly in a vehicle, based on the user authorisation, characterised in that it comprises at least two fuel tanks (7) equipped with external fuel supplies (4), a gauge (5) of the fuel level in the tank (7), where the discharges (71) from the tanks lead to at least three-way solenoid discharge valve (8) with a fuel outlet (81) connected to the fuel system (9), where the data outputs (51) from the gauges (5) are connected to the processing unit (2), which is equipped with at least two indication inputs (11) from the indicator (1) of the user identification code and where the display output (21) of the processing unit (2) is connected to the display unit (3) with a screen and the operating output (22) is connected to at least three-way solenoid discharge valve (8) or an electric circuit for ignition or immobilizer.

## Description

### Field of the Invention

The technical solution relates to a connection providing control of drawing fuel from the combustion engine tank into the fuel system, the volume of the fuel drawn depending on the authorisation of the user of the combustion equipment, particularly in a vehicle. The level of authorization or the manner of use is determined by the equipment owner or operator.

### Prior State of the Art

In the event that a vehicle or other equipment with a combustion engine is used by more users, it is not possible to record automatically the fuel consumption of individual users, it is not possible to limit the use of the vehicle by the volume of consumed fuel, for example, or limit the use of the vehicle on time basis. The log books kept by companies are usually unreliable, the trips are often recorded retrospectively and inaccurately. If a vehicle is shared by more users in the private sector, disputes often arise concerning the amount of fuel consumed, the sharing itself being conditioned by truly responsible approach on the part of all users and voluntary observance of the agreed conditions. In both business and private sectors, there is the need of demonstrable management and trouble-free control of a vehicle operation on the part of its owner or operator, as currently the owner or operator of a private or company vehicle can not control or automatically monitor the vehicle used by other persons in a directive manner.

The aim is to solve this problem, so that it is possible to modify or complement the fuel system during the vehicle production to allow the vehicle owner to control or at least monitor the volume of the fuel consumed by each of the vehicle users.

### Technical Solution

The aforementioned task is solved by the connection according to the technical solution, which is a connection for the control of drawing fuel from the tank into the fuel system, particularly in a vehicle, depending on the authorisation of the user. The principle of the solution is based on the fact that there are at least two fuel tanks, each equipped with an external fuel supply and a gauge measuring the current fuel level in the tank. The discharges from the tanks lead to at least three-way solenoid discharge valve with the fuel outlet connected to the fuel system. Data outputs from the gauges are supplied to the processing unit which is equipped with at least two indication inputs from the indicator of the user identification code. The display output is supplied to the display unit with a screen. The operating output is supplied to at least three-way solenoid discharge valve / or electrical circuit for ignition / or immobilizer.

The connection in another embodiment may have a common fuel supply for the tanks which is connected before the tanks to a multi-way supply valve with one fuel intake and at least two fuel discharges to the tanks. A baffle output from the processing unit is connected to it as well.

The aforementioned task is also solved by a separate solution designed for the same purpose and making use of similar technical means, which is a connection for the control of drawing fuel from the tank into the fuel system, particularly in a vehicle, depending on the authorisation of the user. This connection comprises a fuel tank and an external fuel supply with a breaker installed after the external supply. The tank is equipped with a gauge of fuel level, the data output of which is connected to the processing unit. The display output is supplied to the display unit with a screen. The blocking output is connected to the breaker of the external fuel supply and the control output is connected to the fuel flow valve from the tank to the fuel system / or to the electric circuit for ignition / or to the immobilizer. The processing unit is equipped with at least two indication inputs from the indicator of the user identification code.

The advantage and benefit of the present technical solution is that it allows the owner or operator of a vehicle to control or at least monitor the volume of fuel consumed by each user of the vehicle.

### Figures in Drawings

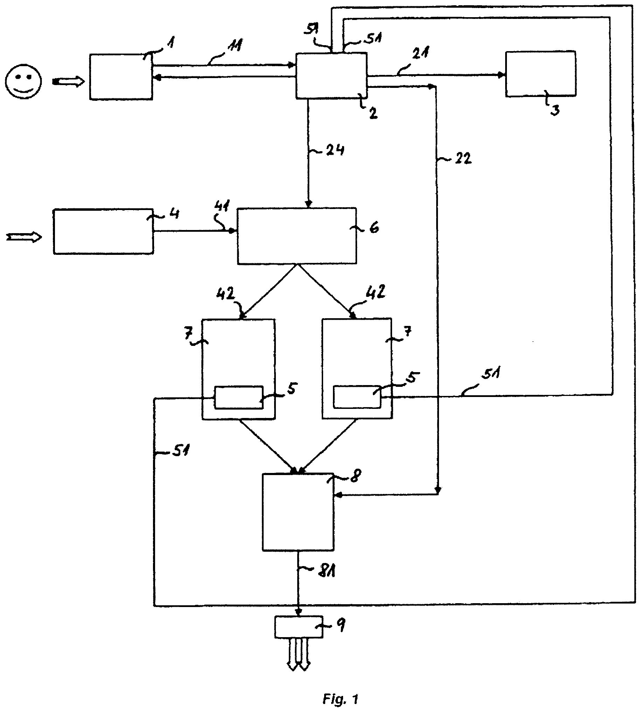

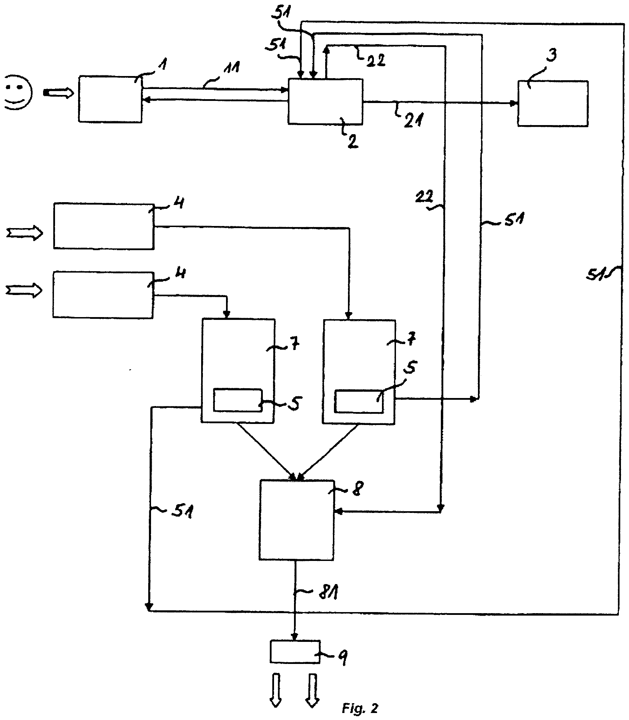

The technical solution is described in detail in the examples of designs accompanied by figures. Figure 1 shows the first example of the design with a single fuel supply, while Figure 2 represents an alternative design with two fuel supplies. Figure 3 shows a separate solution with virtual division of the tank.

### Examples of Technical Solution

### Example 1

### Connection Description:

The first example of the technical solution assumes only one external fuel supply 4, as it is common in standard vehicles. The supply 4 looks like a standard one at the first sight and it can be locked from the inside of the vehicle or by an external lock. Nevertheless, the fuel tanks 7 consist of several separate sections; there are two of them in the described example. Each section of the tank 7 is equipped with a gauge of fuel level 5 in the tank 7. Between the fuel supply 4 and the sections of the tank 7, there is a multi-way solenoid supply valve 6, that is a three-way supply valve 6 in the described example, with one fuel intake 41 and several fuel discharges 42, two fuel discharges 42 in the described example, into the sections of the tank 7. The primary structural element of the connection according to the present technical solution is a processing unit 2, into which the data outputs 51 from the gauges 5 of the fuel level in the tank 7 are connected. Its baffle output 24 is connected to the three-way supply valve 6 and the operating outlet 22 is connected to the multi-way, three-way in the described example, solenoid discharge valve 8 with the fuel outlet 81 leading to the fuel system 9. The display output 21 of the processing unit 2 is supplied to the display unit 3 with a screen. The processing unit 2 is also provided with an indication input 11 from the indicator 1 of the user identification code.

### Functions and technical design of the connection components:

The indicator 1 with the indication input 11 into the processing unit 2 is a device providing communication with the processing unit 2. It is used by each user when logging in the processing unit 2 by entering a specific code or another indication character. The user indicator 1 can have the form of buttons, touch keyboard, chip in the starter key, etc.

The processing unit 2 is a technical device provided with software for user identification and assigning the user appropriate rights as specified by the operator or owner. Having received the data from the data output 51 from the gauge 5 of the fuel level in the tank 7 assigned to an identified user, the processing unit 2 shows through the display output 21 on the screen of the display unit 3 at least the information about the fuel volume in the appropriate tank 7, or the information about the fuel volume that might be drawn into the tank 7 assigned to the user at the given time, or the information on the period of time for which the identified user can use the vehicle. Depending on the user identification, the processing unit 2 controls the opening of the appropriate discharge 42 of the fuel drawn into the tank 7 assigned to the identified user. The processing unit 2 can also close the fuel outlet 81 from the fuel tank 7 into the fuel system 9 through the operating output 22, for example when the time set by the operator for the use of the vehicle expires.

The gauges 5 provide information about the current volume of fuel in the tank 7, which is supplied to the processing unit 2 through the data outputs 51. The supply valve 6, in the described example of the three-way design, has a fuel intake 41 for the drawn fuel and discharges 42 into the tanks 7, where the opening or closing of the discharge 42 is controlled by the processing unit 2 through the baffle outputs 24.

The fuel outlet 81 of the solenoid discharge valve 8, which supplies fuel from the tank 7 to the fuel system 9, is controlled by the processing unit 2 according to the rights assigned to each user, for example according to the fuel consumed in a period of time, or according to the schedule regardless of fuel consumption, etc.

### Example 2

This example assumes a higher number of fuel supplies 4, depending on the number of tanks 7. In the described example, there are two supplies 4 and two tanks 7, or, respectively, two separate sections of the tank 7. Contrary to the previous example, no supply valve 6 is necessary, as the supply 4 to the assigned tank 7 is made available for the identified user, or the user has to know which supply 4 to use to pump fuel into the assigned tank 7, because the processing unit 2 would not open the fuel outlet 81 of the discharge valve 8 supplying fuel into the fuel system 9 from a different tank 7.

The function and operation of other technical elements are the same as in the previous example.

### Example 3

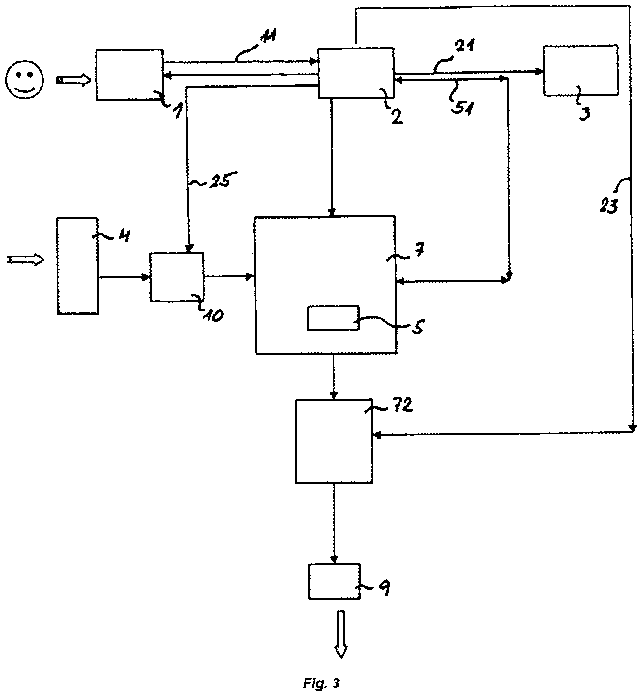

As this example shown in Figure 3 is a separate solution applied for the same purpose using similar technical devices, it will be stated as a separate claim, while maintaining the integrity of the technical solution.

### Connection Description:

The connection comprises a tank 7 and an external supply 4 with a breaker 10 installed after the external supply 4. The tank 7 is equipped with a gauge 5 of fuel level in the tank 7, the data output 51 of which is connected to the processing unit 2. The display output 21 is connected to the display unit 3 with the screen, the blocking output 25 is connected to the breaker 10 of the external fuel supply 4 and the control output 23 is connected to the fuel flow valve 72 from the tank 7 to the fuel system 9. The processing unit 2 is equipped with at least two indication inputs 11 from the indicator 1 of the user identification code.

### Functions and technical design of the connection components:

The indicator 1 with the indication input 11 into the processing unit 2 is a device providing communication with the processing unit 2. It is used by each user when logging in the processing unit 2 by entering a specific code or another indication character. The user indicator 1 can have the form of buttons, touch keyboard, chip in the starter key, etc.

The tank 7 in this separate example is hypothetically divided into several, one can say virtual, tanks 7, as each identified user is assigned a certain volume of fuel from the total volume of fuel in the tank 7 which is monitored.

The processing unit 2 is a technical device provided with software for user identification and assigning the user appropriate rights as specified by the operator or owner. The software monitors the set number of users and their identification characteristics and allows the users to draw and consume fuel, i.e. fuel supply into the fuel system, depending on the number of users and set conditions. The fuel supply can also be limited in time. Having received the data from the data output 51 from the gauge 5 of the fuel level in the virtual tank 7, i.e. the fuel volume assigned to an identified user that the user can consume, the processing unit 2 shows through the display output 21 on the screen of the display unit 3 at least the information about the fuel volume available to the user, or the information about the fuel volume that might be drawn up to the volume assigned to the user at the given time, or the information on the period of time for which the identified user can use the vehicle. Depending on the user identification, the processing unit 2 controls the opening of the fuel flow valve 72 from the tank 7 into the fuel system 9. The processing unit 2 can also close the flow valve 72 from the tank 7 into the fuel system 9, for example when the time set by the operator for the use of the vehicle expires.

### Industrial Application

Both independent connections according to the technical solution can be applied mainly in the automotive industry to increase the utility value of vehicles for companies and private sector. The connection can be available at least as an optional equipment of virtually every car.

### List of reference characters:

- 1 -: indicator
- 11 -: indication input into the processing unit 2
- 2 -: processing unit
- 21 -: display output from the processing unit 2
- 22 -: operating output from the processing unit 2
- 23 -: control output from the processing unit 2
- 24 -: baffle output from the processing unit 2
- 25 -: blocking output from the processing unit 2
- 3 -: display unit
- 4 -: fuel supply
- 41 -: fuel intake
- 42 -: fuel discharge to the tank 7
- 5 -: gauge of fuel level in the tank 7
- 51-: data output of the gauge 5
- 6 -: supply valve
- 7-: tank
- 71 -: discharge
- 72 -: flow valve
- 8 -: discharge valve
- 81 -: fuel outlet
- 9 -: fuel system
- 10 -: breaker of fuel supply 4

## Claims

1. Connection providing control of drawing fuel from the tank into the fuel system, particularly in a vehicle, based on the user authorisation, **characterised in that** it comprises at least two fuel tanks (7) equipped with external fuel supplies (4), a gauge (5) of the fuel level in the tank (7), where the discharges (71) from the tanks lead to at least three-way solenoid discharge valve (8) with a fuel outlet (81) connected to the fuel system (9), where the data outputs (51) from the gauges (5) are connected to the processing unit (2), which is equipped with at least two indication inputs (11) from the indicator (1) of the user identification code and where the display output (21) of the processing unit (2) is connected to the display unit (3) with a screen and the operating output (22) is connected to at least three-way solenoid discharge valve (8) or an electric circuit for ignition or immobilizer.

2. Connection according to Claim 1, **characterised in that** there is a common fuel supply (4) for the tanks (7) and it is connected before the tanks (7) to a multi-way supply valve (6) with a single fuel intake (41) and at least two fuel discharges (42) into the tanks (7), with the baffle output (24) from the processing unit (2) connected to the fuel intake (41).

3. Connection providing control of drawing fuel from the tank into the fuel system, particularly in a vehicle, based on the user authorisation, **characterised in that** it comprises a fuel tank (7) equipped with an external fuel supply(4) with a breaker (10) installed after the external supply (4), where there is a gauge (5) installed in the tank (7) measuring the fuel level in the tank (7) with the data output (51) connected to the processing unit (2), whose display output (21) is connected to the display unit (3) with a screen, the blocking output (25) is connected to the breaker (10) of the external fuel supply (4) and the control output (23) is connected to the fuel flow valve (72) from the tank (7) to the fuel system (9) or the electric circuit for ignition or immobilizer, the processing unit (2) being equipped with at least two indication inputs (11) from the indicator (1) of the user identification code.
